# EUROPEAN PATENT APPLICATION

(11) **EP 4 725 914 A1**
(43) Date of publication of application: **15.04.2026**
(21) Application number: 25207356.4
(22) Date of filing: 07.10.2025
(51) Int. Cl.: C02F 1/32, C02F 103/04

(54) **DEVICE FOR TOC REDUCTION IN ULTRAPURE WATER**

(30) Priority: 08.10.2024 US 202418909711
(71) Applicant: Ovivo Inc., Montreal, QC H3A 2R7 (CA)
(72) Inventor: Devillers, Alexandre, 68270 Wittenheim (FR); Rychen, Philippe, 68640 Muespach-le-haut (FR)
(74) Representative: Meissner Bolte Partnerschaft mbB

(57) **Abstract**

For TOC reduction by UV radiation, in the production of ultrapure water, a cylindrical UV reactor surrounded by a quartz sleeve radiates through an annular water flow channel no more than 10 mm to 15 mm wide. This causes the water to circulate in the annular zone highly exposed to the 185 nm wavelength of the UV radiation, as well as all other wavelengths under 200 nm. For optimization of mixing of the water in the zone, baffles or perturbators are provided at a series of locations to effect mixing of different layers of liquid thus promoting radial movement of the water around the quartz tube.

## Description

### Background of the Invention

The invention concerns water treatment, particularly treatment involving ultraviolet (UV) radiation to obtain ultrapure water.

In the field of water treatment, including production of ultrapure water, the UV wavelength 185 nm is commonly used to reduce total organic carbon (TOC) in water. However, this UV wavelength is strongly absorbed in water, and it is considered that beyond 10 mm from the UV source, 185 nm waves, and all other wavelengths under 200 nm, are essentially completely absorbed by the water. Typically a low pressure mercury lamp emits a spectrum of 254 nm and 185 nm spectrum.

Conventionally designed UV reactors have not included a restriction to no more than 10 mm distance from the UV source to the outer wall of the chamber. In some cases the reactors have included a large cylinder into which a plurality of elongated UV lamps are axially positioned. In such a cylinder the water circulates around the lamps. Still, maximum distance of UV travel through the water is often more than 10 mm.

The prior art has recognized that the water flowing through a UV reactor, with one or more UV sources arranged axially, must be disturbed from laminar flow, by the use of baffles for perturbators. Examples of this aspect of the prior art are shown in Patents Nos. 5,352,359, 5,846,437, U.S. Pub. No. 2011/0318237 and 2011/0024365, as well as U.K. Patent document No. GB 2579966. See also the applicant's U.S. Patent No. 12,077,456. These patents and publications show various types of baffles and devices for inducing eddy currents and mixing within an ultraviolet water disinfecting reactor device.

### Summary of the Invention

The invention provides an improved and more efficient UV reactor for treating water, particularly for reducing TOC and producing ultrapure water, in a cylindrical configuration with the water flowing axially between an internal UV emission device and a bounding cylindrical wall. The distance traveled radially by UV radiation, particularly 185 nm wavelength, is preferably not greater than about 10 mm to assure complete UV treatment of the water. The cylindrical shell of the reactor preferably is of polished stainless steel, providing a relatively high reflectivity. The central, elongated UV lamp is surrounded by a quartz sleeve, along and around which water circulates as it travels generally axially through the reactor. The annular cross section providing a channel for the water is no more than about 10 mm in width in a preferred embodiment. Thus, water circulates in the reactor zone highly exposed to the wavelength 185 nm.

The annular flow channel for the water includes baffles or perturbators, the geometry of the baffles being an important aspect of the invention. The one or more baffles or perturbators are preferably flat structures extending inwardly from the wall of the reactor shell, blocking flow in much of the annular channel, establishing a flow shape that may be symmetrical left/right and top/bottom but not symmetrical as to both directions, i.e. flow openings left and right differ from those at top and bottom. The geometry of the perturbator induces vortices that favor movements between the different radial layers of the water, while not producing objectionably significant pressure loss through the reactor. This allows the maximum number of TOC molecules present in the water to be exposed as close as possible to the quartz sleeve and able to react with OH radicals produced by photolysis.

In an embodiment of the invention the annular flow channel through the tube can be up to 15 mm wide, when combined with baffles or perturbators effective to cause vigorous movement of the water outwardly and inwardly in the channel to maximize exposure to the UV radiation.

In one preferred embodiment, the length of the reactor includes multiple perturbators, but with the geometry rotated as to successive perturbators.

The perturbators in the UV reactor of the invention, which may be confined to a flow path approximately 10 mm wide, optimize the flow disturbance to increase the UV dose on each molecule of water. Testing has shown that the specific energy requirement with this design can be reduced by a factor of 1.5 as compared to current conventional configurations. In addition, the invention generally uses fewer UV lamps, and a smaller footprint, which can be reduced up to a factor of 3.

Additional embodiments of the invention can employ multiple UV lamp tubes, wherein again the UV radiation never travels over 10 mm (or 15 mm with adequate baffling) through the water.

### Description of the Drawings

Figure 1 is a perspective view showing a UV water purification reactor of the invention.
Figure 2 is a perspective view in cross section showing the reactor.
Figure 3 is a side sectional elevation view showing the reactor, with length abbreviated.
Figures 4 and 5 are schematic cross views showing positions of baffles or perturbators within the reactor structure, as seen along the plane 4-4 and 5-5 in Figure 3.
Figure 6 is an enlarged view showing an example of a baffle.
Figure 6A shows in perspective the operable baffle configuration.
Figure 7 is a perspective view showing the baffle of Figure 6.
Figure 8 is a cross sectional view as seen along the plane 8-8 in Figure 6, showing the baffle.
Figure 9 is a perspective schematic view showing one of the baffles as positioned within the tubular reactor.
Figure 10 is a schematic view in perspective, indicating turbulent mixing flow induced by a baffle as positioned in the reactor tube.
Figure 11 is a schematic perspective view indicating turbulent flow induced by two successive baffles with a 90° difference in orientation within the reactor tube.
Figures 12 and 13 are perspective views showing further embodiments for reactor tubes having multiple UV lamp assemblies.
Figures 14 and 15 are elevation views in section indicating structure to prevent UV radiation escape out the inlet and outlet.

### Description of Preferred Embodiments

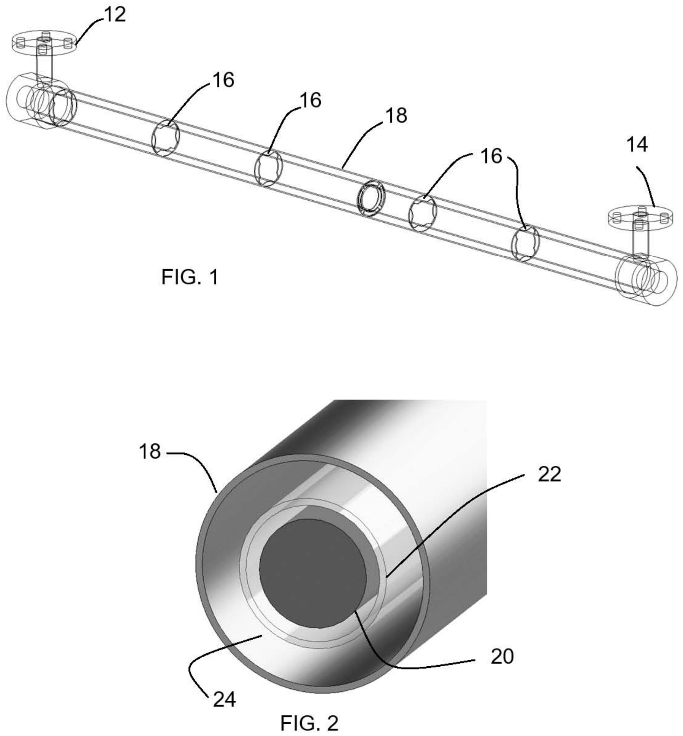

Figure 1 shows an ultrapure water treatment UV reactor 10 in one embodiment, for removing TOC from water. A water inlet and a water outlet are shown at 12 and 14. As shown, the tube is elongated in shape, and in one embodiment can be, for example, about 1.7 meters in overall length, with an outside diameter of approximately 7 cm. This is only an example; other dimensions can be used. A series of internal baffles 16 are indicated within the reactor tube 18.

The sectional view of Figure 2 shows the reactor tube 18, which contains a UV lamp 20, preferably centrally located within an elongated quartz sleeve 22. The sleeve 22 preferably is of high purity quartz (synthetic quartz). The interior of the sleeve 22 is sealed against entry of liquid. Water to be treated flows through an annular channel 24 between the exterior of the quartz sleeve 22 and the interior of the cylindrical shell 18, which is preferably polished stainless steel. The absolute maximum width of the annular channel 24 is 10 mm, in order to assure that every molecule of water and its contaminants are exposed to the UV radiation, preferably 185 nm wavelength.

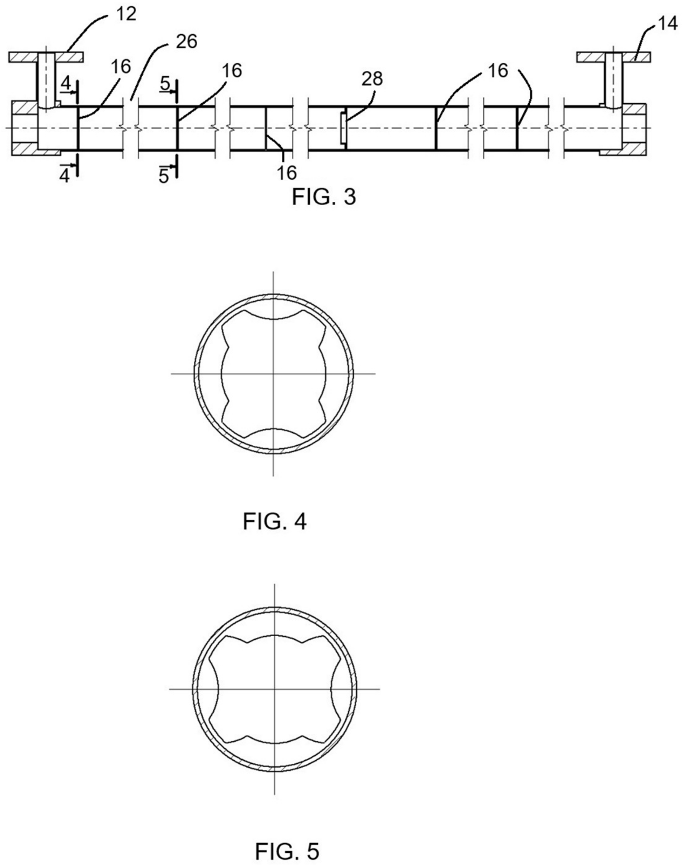

Figure 3 shows some details of construction of a preferred embodiment of the reactor. The reactor tube 18 is shown shortened in length, as indicated at break lines 26 in the drawing, for clarity.

As noted above, the length and diameter of the tube can vary. Although the wall thickness of the tube 18 can be, for example, about 2 mm (+/- 0.2 mm), this also can vary.

As seen in the drawing, baffles 16 preferably are positioned at intervals within the tube 18. Figure 3 shows, as an example, five baffles. The drawing also indicates another structure at 28, but this structure simply functions to retain the quartz sleeve 22 centrally within the cylindrical tube 18.

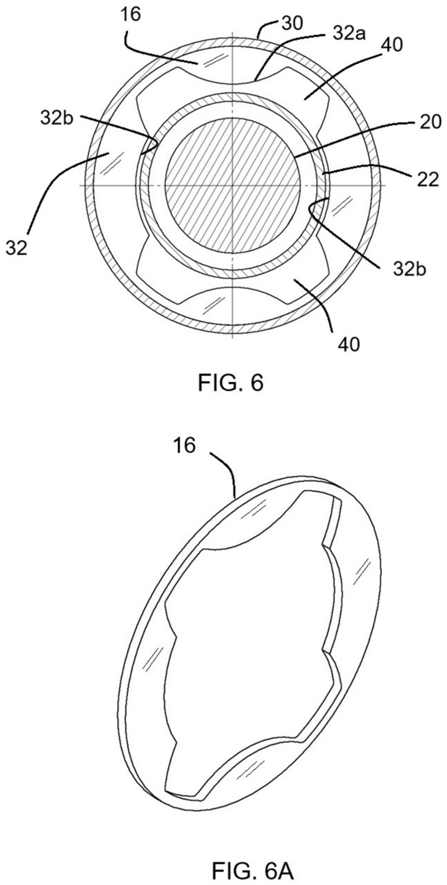

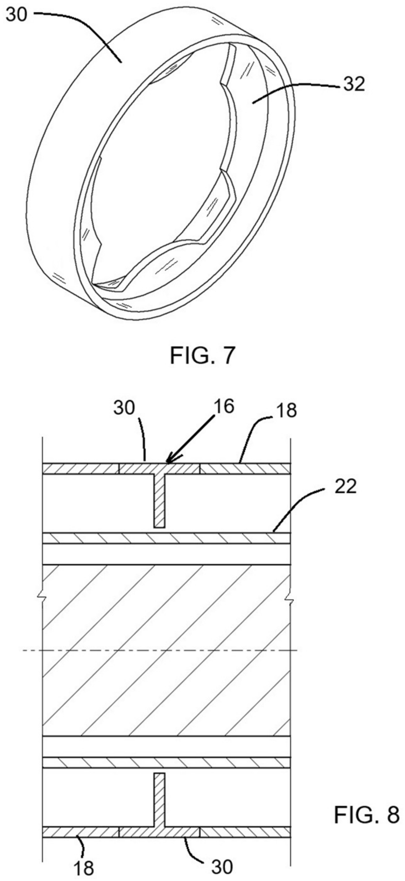

An exemplary embodiment of a baffle 16 is shown in Figures 6, 6A, 7 and 8. In this preferred geometry the baffle includes a short section of sleeve 30 having the same outer diameter as the tube 18 welded into the steel tube 18 at an interruption in the tube as shown. The baffle structure is shown at 32. In this particular geometry the baffle structure is symmetrically shaped left to right, and also symmetrically shaped top to bottom, but the top and bottom geometry differs from the left and right geometry, as shown. At top and bottom the baffle of this embodiment has an interior-facing convex curve (preferably an arc) 32a, while at left and right the baffle geometry is interiorally concave as at 32b, both sides, so as to fit over the quartz tube 22. These shapes can be arcs, with the arcs 32a having a radius of about 22 mm and the arcs 32b having a radius of about 23 mm to result in a small gap with the quartz tube's outer diameter to allow for mechanical assembly. In this example the overall outer dimension of the baffle is approximately 70 mm, as with the tube itself. Internal diameter of the tube can be about 66 mm. The thickness of the sleeve 30 can be about 2 mm, as can be the thickness of the baffle 32, for this example.

Figure 6A shows only the operable part of the baffle structure, that is positioned in annular channel in the path of water flow, without the tubular sleeve 30 (shown in Figures 6, 7 and 8).

Figures 4 and 5 show that the baffles, when more than one is included, alternate in orientation between successive baffles, preferably alternating 90°. Thus, Figure 4 shows the baffle 16 as oriented in Figure 6, while Figure 5 shows the baffle rotated 90°. Similarly, baffles at additional positions through the length of the tube 18 are alternated in orientation. As can be seen in Figure 6, very little flow occurs at left and right where the baffle nests very closely to the quartz tube 22. At top and bottom, however, flow openings 40 are shaped as shown, including two large areas connected by a narrow constriction with a minimum clearance of about 1 to 2 mm. The baffles are all deburred and without any sharp edges, for establishing the desired turbulent flow of water through the tube 18.

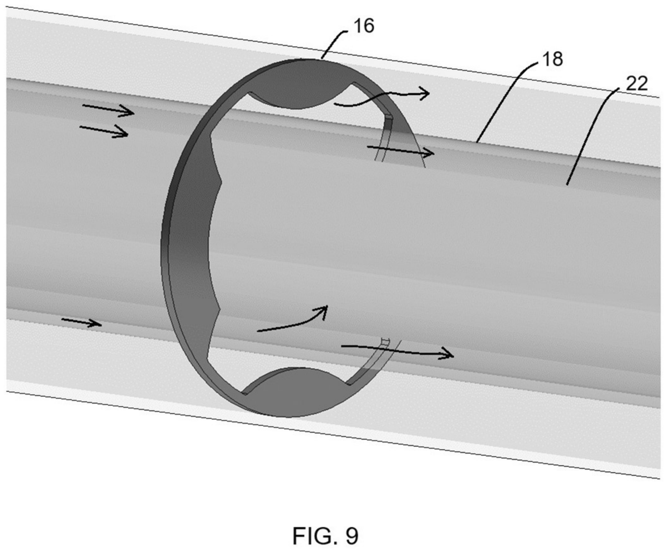

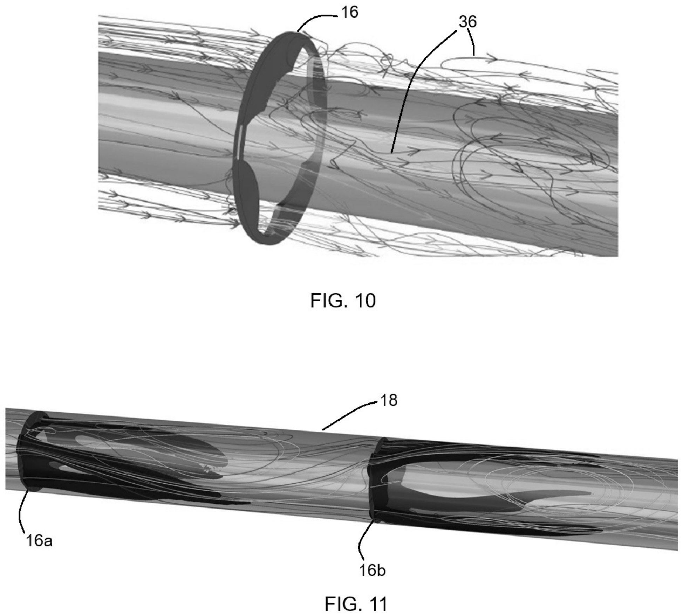

Figure 9 shows in perspective a baffle 16 within the tube 18, the baffle surrounding the quartz sleeve 22. Figure 10 schematically and approximately indicates a turbulent flow of water through a single baffle 16, with major flow areas of the baffle at left and right. Flow is left to right in this perspective drawing, and flow lines, including eddy currents and vortices, are approximately indicated by lines with arrows 36.

With multiple spaced apart baffles through the length of the annular channel, staggered in rotation (as shown in Figures 4 and 5), the streams or veins of flow are caused to rotate in the volume. Also, as shown in Figure 10, eddy currents and vortices are created in the annular flow volume, which encourages movement between the different radial layers of the water, without objectionable pressure loss.

Figure 11 shows generally, and schematically, the effect of multiple baffles in tandem within the tube, i.e. within the annular flow space. The upstream baffle 16a is shown with its major open areas at left and right, resulting in major flow at the two opposed darkened flow reaches. This causes swirling or helical movement of the flow, as well as vortices, and when the flow reaches the second baffle 16b, the effect is enhanced. The baffle 16b is rotated 90° from the first baffle, causing rotation of the major flow and further vortices and eddy currents, causing the water to move outwardly and back inwardly, assuring that all water encounters proximity to the UV source (i.e. the quartz tube) during part of its travel.

Note that the baffles can take other forms, with different flow channel configurations, so long as the baffles are constructed to cause swirling, eddy currents and vortices within the flow of water as it travels through the tube. A staggering of rotational orientation of baffles, each of which has major flow openings at 180°(or otherwise unbalanced between top/bottom and left/right), is preferred. However, other baffle configurations are possible, such as non-flat baffles with flutes or vanes that cause constant movement outward and inward for best UV exposure. The annular flow channel in the tube preferably is about 10 mm (+/- 10%) in width, although it could be up to 15 mm in width if adequate mixing is provided via the baffles such that all water travels close to the quartz tube part of the time.

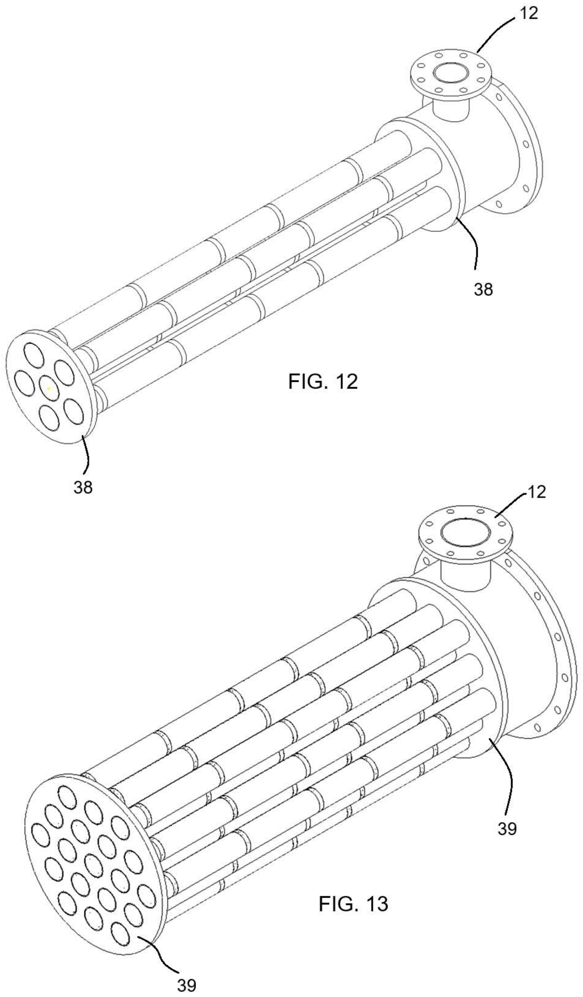

Figures 12 and 13 indicate additional configurations of reactors according to the invention. In Figure 12 a grouping of six tubes is shown, each with its own annular flow volume, fed by a single inlet 12 as well as a single outlet (not shown). A manifold plate 38 at each end connects all tubes to the inlet and the outlet. In Figure 13 nineteen tubes are indicated, again fed by a single inlet 12 and a single outlet but each providing a separate inlet flow volume, via manifold plates 39 at the inlet and the outlet.

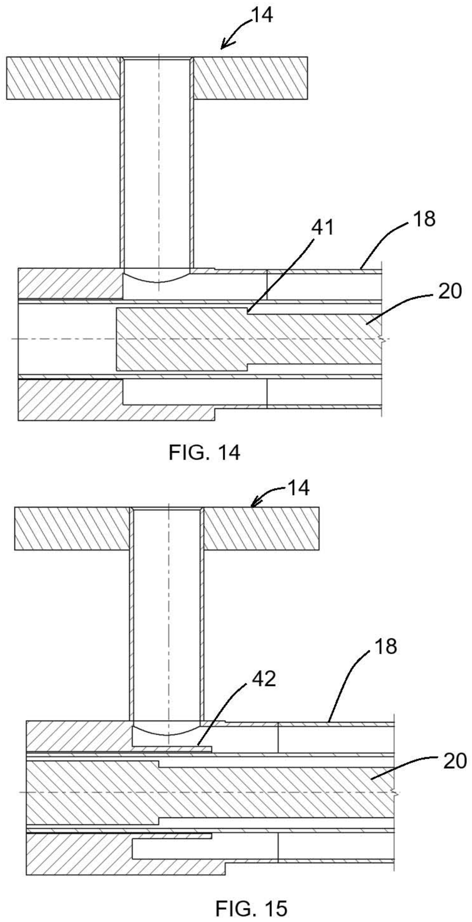

The reactor of the invention is preferably constructed so as to prevent UV radiation from being directed into and through the outlet 14, as well as the inlet 12, not shown, of the reactor. Figures 14 and 15 show two different structural arrangements to prevent this. In Figure 14 the UV lamp 20 is positioned such that its end 41 is short of the outlet position (to the right in Figure 14), so that the radially directed UV radiation cannot be directed through the outlet (or the inlet). In Figure 15 the lamp 20 is of essentially full length, but a UV shield 42 is positioned between the lamp and the outlet 14.

The term "about" or "approximately" as used with numerical limitations herein is intended to encompass plus or minus 10% of the value stated.

The above described preferred embodiments are intended to illustrate the principles of the invention, but not to limit its scope. Other embodiments and variations to these preferred embodiments will be apparent to those skilled in the art and may be made without departing from the spirit and scope of the invention as defined in the following claims.

## Claims

1. A device for TOC reduction by UV oxidation in the production of ultrapure water, comprising:
an elongated stainless steel cylindrical tube,
an elongated high purity quartz tube within the stainless steel tube, defining an annular channel volume no greater than about 10 mm in width between the quartz tube and the stainless steel tube,
a UV source within the quartz tube, positioned to radiate UV radiation outwardly through the annular channel volume, the radiation including wavelengths smaller than 200 nm, and
an inlet for water at one end of the elongated stainless steel tube and an outlet for water at an opposite end, so that water can be conducted through the annular channel volume from the one end to the opposite end to oxidize and/or reduce TOC in the water.

2. The device of claim 1, including at least one baffle within the annular channel volume in the path of water to flow through the volume, to cause exchange between inner and outer layers of the water as the water moves through the annular channel volume, exposing substantially all such flowing water to close proximity to the quartz tube and the UV source.

3. The device of claim 2, the baffle being configured to disturb laminar flow of water by creating eddy currents and vortices in the flowing water.

4. The device of claim 3, including a series of the baffles within the annular flow channel volume.

5. The device of claim 4, wherein each baffle has preferential major flow openings at particular rotational orientations, and wherein the series of baffles are staggered in rotational orientation from baffle to baffle, so that when water flows through the annular channel volume the water is induced to further mix and swirl and causing essentially all of the water to flow in close proximity to the quartz tube.

6. A series of elongated stainless steel cylindrical tubes with quartz tubes and UV sources as in claim 1, in a modular ultrapure water producing device wherein each of said inlet and said outlet includes a manifold plate connecting the inlet or outlet with all of the stainless steel cylindrical tubes, to produce a high throughput of ultrapure water.

7. A device for TOC reduction by UV oxidation in the production of ultrapure water, comprising:
an elongated stainless steel cylindrical tube,
an elongated high purity quartz tube within the stainless steel tube, defining an annular channel volume no greater than about 15 mm in width between the quartz tube and the stainless steel tube,
a UV source within the quartz tube, positioned to radiate UV radiation outwardly through the annular channel volume, the radiation including wavelengths of smaller than 200 nm,
an inlet for water at one end of the elongated stainless steel tube and an outlet for water at an opposite end, so that water can be conducted through the annular channel volume from the one end to the opposite end to oxidize and reduce TOC in the water, and
including at least one baffle within the annular channel volume in the path of water to flow through the volume, effective to cause exchange between inner and outer layers of the water as the water moves through the annular channel volume, exposing substantially all such flowing water to close proximity to the quartz tube and the UV source.

8. The device of claim 7, the baffle being configured to disturb laminar flow of water by creating eddy currents and vortices in the flowing water.

9. The device of claim 8, including a series of the baffles within the annular flow channel volume.

10. The device of claim 9, wherein each baffle has preferential major flow openings at particular rotational orientations, and wherein the series of baffles are staggered in rotational orientation from baffle to baffle, so that when water flows through the annular channel volume the water is induced to further mix and swirl and causing essentially all of the water to flow in close proximity to the quartz tube.

11. A series of elongated stainless steel cylindrical tubes with quartz tubes and UV sources as in claim 7, in a modular ultrapure water producing device wherein each of said inlet and said outlet includes a manifold plate connecting the inlet or outlet with all of the stainless steel cylindrical tubes, to produce a high throughput of ultrapure water.
